# EUROPEAN PATENT APPLICATION

(11) **EP 3 246 898 A1**
(43) Date of publication of application: **22.11.2017**
(21) Application number: 16382223.2
(22) Date of filing: 20.05.2016
(51) Int. Cl.: G09B 21/00

(54) **READING METHOD FOR BLIND PEOPLE VIA AN ELECTRONIC DEVICE AND ELECTRONIC READING DEVICE FOR BLIND PEOPLE**

(71) Applicant: Braibook, SL, 08222 Terrassa (ES)
(72) Inventor: MADOLELL DOMENECH, Carlos, 08222 Terrassa (ES)
(74) Representative: Juncosa Miro, Jaime

(57) **Abstract**

A Braille display including scrolling function for Braille text. Method comprises an electronic device (1) integrating activable areas (11) distributed in a configuration of rows (N) and columns (M); a processing unit for processing a text file and converting it into Braille text; a speed controller (12) for controlling an activation speed of the activable areas (11); and a driver (15). The processing unit a) feeds the characters of the Braille text to a log of the driver (15) in the form of a succession of elements, the driver b) uploads a first element of the succession of elements into a first column (M1) and subsequently c) moves it to a second column (M2). Finally, an electric pulse is generated, either in step b) or in step c), in the first column (M1), or in the first and in the second column (M2), when the driver (15) receives an activation signal (/LE).

## Description

### Field of the Art

The present invention relates to a reading method for the blind for reading by means of an electronic device and to an electronic reading device for the blind. The method and device of the present invention allow converting any text document in electronic format and in any language into Braille code, thereby allowing visually impaired people to read.

### Background of the Invention

Electronic reading devices by means of Braille characters to allow blind people to read are widely known.

For example, patent document KR-B1-101597913 discloses an electronic reading device for the blind including a control module with protrusions in the form of buttons/pins. Likewise, the electronic reading device includes a sensor detecting the touch input of the buttons. The control module controls the elevation of the buttons and determines the touch location in the buttons.

Patent application document US-A1-20120295232 discloses a touch sense device for reading in Braille characters. The device includes a series of sensors/keys implementing an electric pulse technology to mimic a Braille dot. Each of the mentioned sensors consists of eight dots and is composed of an anode (+) and a cathode (-) with each dot arranged in a two by four matrix portraying a Braille syntax. Depending on the Braille characters that are to be represented, different low-intensity electric currents are passed through different positioned anodes, when touched by a finger a current is delivered to the cathode completing the electrical circuits forming the characters in the form of dot/dots. It therefore relates to a communication device for visually impaired people to read, write, edit and interact in social networks and/or communication media.

Patent document CN-B-102222430 discloses an electronic reading device for the blind including a display for showing the Braille characters, a valve array, a driving module and a control module. The display includes a plurality of dots for showing the Braille characters. The valve array comprises a plurality of on/off valves for controlling whether or not said plurality of dots is projected. The driving module is responsible for powering the display, and the control module is responsible for turning the corresponding valves on/off by means of a switch tube through a control line based on received electronic data.

Patent application document US-A-6159013 discloses a portable reading device for the blind with optical sensors capable of processing printed text and recognizing printed characters, as well as software for converting said printed characters into Braille characters, and a touch recognition area which is characterized in that the reading device is formed by a miniature housing fixed as a result of a sleeve over the tip of the blind person's index finger like a thimble. The mentioned miniature housing includes an optical sensor array, a touch surface, an electromagnetic unit conceived for displaying in Braille one character at a time as soon as the blind person's finger slides over a printed character; and when said index finger is exactly located over said character; this electromagnetic unit includes six electromagnets intended for reproducing Braille characters and two further electromagnets, for indicating incorrect tracking to the reader; the latter two electromagnets being activated when the blind person moves their finger too far up or down as it runs along a line of text.

Patent application document DE-A1-102005001064 discloses a device and a method for the direct reading of printed text and direct conversion of the reading text into Braille. The device comprises a unit which is inserted on one or more fingers. Said unit recognizes printed text without any data memory or software support by means of using a programmable electronic circuit, particularly a semiconductor circuit, which recognizes the text and converts it through touch elements into Braille text.

Patent document US-B2-8451240 discloses another portable electronic device having a touch-sensitive display and controllers for said display and a method for providing a tactile feedback in the device. The method includes detecting a plurality of characters in the device; detecting a touch by means of the device; determining the next character output; and, in response to determining that the contact is associated with a location in the device, the location of which is associated with the next character, providing a tactile feedback to identify the next character to be shown.

Patent application documents JP-A-2003150897, CN-A-101261555 and KR-A-2014008823 also disclose other electronic devices which can be used to read in Braille.

None of the known background documents discloses a reading method for reading one word at a time or continuously through an electronic reading device in which the sequence of activation and subsequent representation of the characters of the Braille text is performed through a driver by means of uploading a series of data bits that are gradually moved in each of the columns of the electronic device based on an activation signal or bit marking the activation time of the characters.

### Description of the Invention

According to a first aspect, the present invention relates to a reading method for blind people via an electronic device, which comprises, like in the known prior art documents, using an electronic device which integrates: a surface with a plurality of activable areas distributed on said surface in a configuration of at least three rows and at least two columns; a processing unit with one or more processors and at least one memory adapted and configured for processing a text file and converting it into Braille text; the mentioned plurality of activable areas which are adapted and configured for implementing an electric pulse technology by means of the generation of an electric potential to mimic a Braille reading dot according to said previously converted Braille text; and a speed controller for controlling the activation speed of the plurality of activable areas.

Unlike the proposals known up until now, the method proposed by the present invention comprises performing the following steps:
a) feeding, by means of the mentioned processing unit to a log of a driver, characters of the Braille text in the form of a succession of elements;
b) uploading, by means of the mentioned driver, a first element of the succession of elements into a first column of the electronic device;
c) moving, by means of the driver, the first element to a second column of the electronic device; and
d) generating, either in step b) or in step c), the mentioned electric pulse in the first column, or in the first and in the second column, when the driver receives an activation signal, such that at least one finger placed on the surface of the electronic device and affecting the two columns thereof, or one of them, will perceive as a result of the electric pulse of step d) a Braille character, or a part thereof, generated by the activable areas.

The proposed method repeats the preceding steps b) to d) for all the elements of the succession of elements, gradually replacing the elements that have previously entered at least the first two columns of the electronic device.

With the proposed method, the different characters of coded Braille text that are to be shown run over the surface of the electronic device while the reader or user keeps one or more fingers still over the electronic device.

In one embodiment, the plurality of activable areas is distributed on the surface of the electronic device in a configuration of at least three rows and a number of columns higher than two such that the elements of the succession of elements gradually move from column to column from one end of the surface of the electronic device to the other. The electronic device preferably comprises four rows.

According to the present invention, each element corresponds to an X-bit data set, wherein each X-bit data set corresponds to a specific representative character of the Braille text or to a part of said character.

In one embodiment, particularly when the electronic device comprises four rows, the mentioned first element of the succession of elements comprises 4 data bits, the method comprising in step b) uploading each of the 4 data bits corresponding to a specific representative character of the Braille text, or to a part thereof, sequentially into each of the four rows present in the first column of the electronic device based on a clock signal received by the driver.

In another embodiment, particularly when the electronic device comprises three rows, the first element of the succession of elements comprises 3 data bits, and the method in step b) uploads each of the 3 data bits corresponding to a specific representative character of the Braille text, or to a part thereof, sequentially into each of the three rows present in the first column of the electronic device based on the clock signal received by the driver.

In one embodiment, step d) of the proposed method is performed when at least the two columns of the electronic device have received two consecutive elements, such that each of the characters is individually perceived.

In another alternative embodiment with respect to the preceding one, step d) is performed when each column of the electronic device receives an element of the series of elements such that the characters of the Braille text are progressively configured along at least the mentioned two columns of the electronic device.

The proposed method can detect, by means of using a position sensor of the electronic device, the position of at least one finger on the surface of the electronic device, covering one or two of the columns thereof.

Likewise, the Braille character generated by the activable areas can be indicated by means of the generation of a sound signal, for example, by means of electroacoustic means of the electronic device such as a loudspeaker.

According to a second aspect, the present invention relates to an electronic reading device for the blind which, in addition to the elements known in the state of the art, further includes a driver which together with a processing unit of the electronic device allows implementing the method of the first aspect of the invention.

The proposed electronic device is preferably a portable autonomous device including a supply battery for that purpose. Likewise, the electronic device can include a position sensor for detecting the position of a finger on the surface of the electronic device and/or a mechanical interface or voice interface, for adjusting the speed controller of the electronic device.

The electronic device preferably comprises actuators which are implemented in the activable areas of the electronic device. The actuators are preferably made with smart materials, such as for example, silicone-type electroactive polymers (EAPs), which change their internal structure through the injection of an electric potential through the electrodes of the actuators, causing the material to deform vertically. Alternatively, the actuators can be made of piezoelectric materials. In any case, according to the present invention, any material activable through electrical or light stimuli could also be used for making the actuators.

### Brief Description of the Drawings

The foregoing and other features and advantages will be better understood based on the following detailed description of several merely illustrative and non-limiting embodiments in reference to the attached drawings, in which:
Fig. 1 shows two perspective views from two opposite sides of an electronic reading device for the blind according to a preferred embodiment of the present invention; and
Fig. 2 schematically illustrates the driver used by the proposed electronic reading device.

### Detailed Description of an Embodiment

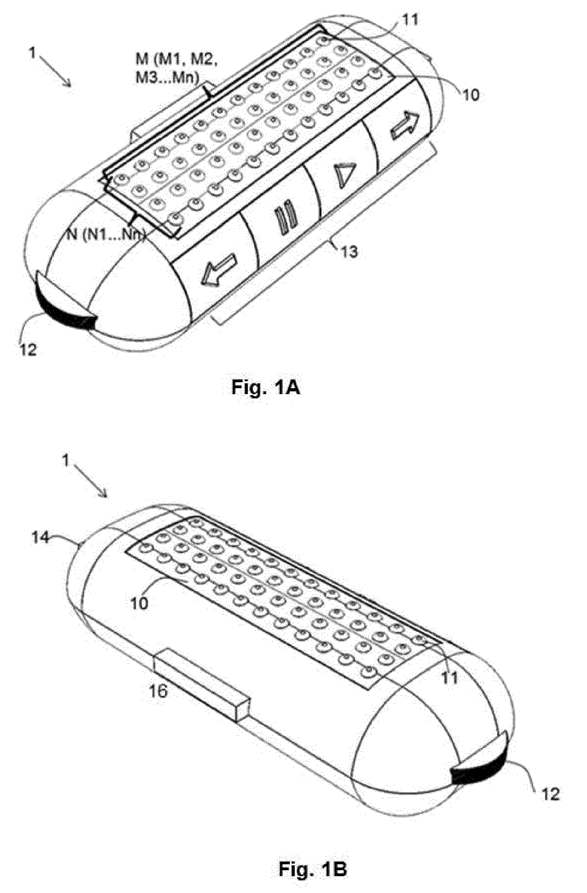

The two perspective views of Figs. 1 A and 1 B show a preferred embodiment of the proposed electronic reading device for the blind. The proposed electronic device 1 is capable of coding documents, in any format (for example, txt, doc, pdf or any other format) and in any language, into the Braille alphabet.

According to this preferred embodiment, the electronic device 1 comprises a surface 10 with a plurality of activable areas 11 distributed on the surface 10 in a configuration of rows N and columns M. Particularly, according to this example, the electronic device 1 consists of four rows N1...N4 and twelve columns M1...M12. It must be pointed out that the electronic device 1 can include any configuration of activable areas 11 provided that the number of rows is at least three and the number of columns at least two.

According to this embodiment, the plurality of activable areas 11 is implemented in the form of actuators. The actuators can be made with any material activable through electric or light stimuli, for example, piezoelectric materials or smart materials, such as EAPs.

The activable areas 11 are adapted and configured for implementing an electric pulse technology by means of the generation of an electric potential to mimic a Braille reading dot according to a Braille text previously processed and converted by a processing unit (including one or more processors and at least one memory) of the electronic device 1. The electronic device 1 also includes a speed controller 12, in this embodiment implemented by means of a mechanical interface such as a control wheel, to enable regulating the reading speed, i.e., for controlling the activation speed of the activable areas 11, and navigation push buttons 13 for accessing the different stored documents and/or files. Likewise, the electronic device 1 includes a battery (it can include more than one battery) for self-sufficiency of the electronic device 1. The battery is preferably charged by means of a USB connection. The processing unit of the electronic device in this case is operatively connected to the different peripherals of the electronic device 1, i.e., the speed controller 12, the navigation push buttons 13, and an uploading unit 16 for uploading the text files and/or documents to be coded.

In one embodiment, the mentioned uploading unit 16 can integrate a slot for a memory card, such that the memory card uploads the document/documents and/or file/files into the electronic device 1. In another embodiment, the mentioned uploading unit 16 integrates a USB port for uploading document/documents and/or file/files into the electronic device 1. The mentioned uploading unit 16 can even include both the mentioned slot for the memory card and the USB port.

Likewise, in yet another embodiment, the text files and/or documents to be coded can be uploaded wirelessly, i.e., by means of a connection of the electronic device 1 (through the processing unit thereof) with a remote server having the mentioned documents and/or files.

In an alternative embodiment with respect to the embodiment described in Fig. 1, which is not illustrated in this case, the speed controller 12 is adjusted by means of a voice-activated software interface. In other words, the reader or user can adjust the speed controller using voice commands. In another alternative embodiment which is also not illustrated, both the speed controller 12 and the navigation commands (which are implemented in the embodiment of Fig. 1 in the navigation push buttons 13) are adjusted by means of a voice-activated software interface. In other words, in this embodiment the electronic device does not include any mechanical interface (control wheel and navigation push buttons) but rather both the control of the speed and the access to different documents and/or files are carried out using voice commands.

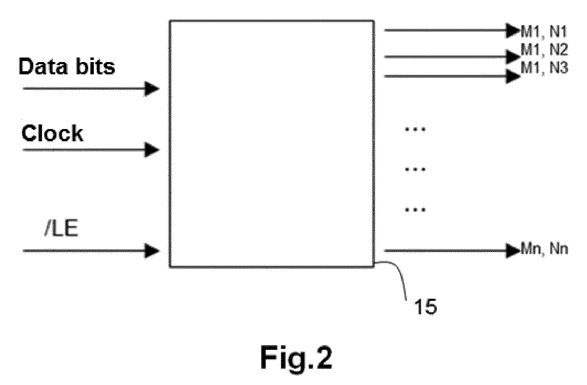

Returning to the description of Fig. 1, the electronic device 1 further includes a driver 15, see Fig. 2, which is at least operatively connected to the processing unit 12. In other words, the driver 15 communicates the software portion with the hardware portion (the activable areas 11) of the electronic device 1. As can be seen in Fig. 2, according to the preferred embodiment, the driver 15 has three input lines and n output lines corresponding to the configuration of rows and columns of the activable areas 11. The three input lines are used for delivering to the driver 15 data corresponding to the character/characters of the Braille text that are to be represented; a clock signal for indicating a data upload into each row N; and an activation signal or bit /LE. According to the preferred embodiment, both the clock signal and the activation signal /LE are generated by the processing unit based on the speed instructions received by the speed controller 12. In this case, both signals from the processing unit are received by the driver 15. The driver 15 also integrates a log (or database) consisting of the Braille characters that must be represented through the activable areas 11 of the electronic device 1.

The electronic device 1, in any of the described embodiments, can also include a position sensor for detecting the position of one or more fingers of the reader or user on the surface 10 of the electronic device 1. Likewise, the electronic device 1 can include electroacoustic means such as a loudspeaker for (aurally) indicating the Braille character generated by the activable areas 11.

According to the proposal of the present invention, the driver 15 characteristically provides two different strategies/methodologies for the representation of Braille text: movement mode and single character mode.

In the movement mode, once a text has been coded into Braille, the processing unit sends to the log of the driver 15 the characters coded into Braille to be represented in the form of a succession of elements. Each element corresponds to an X-bit data set, and each X-bit data set corresponds to a specific representative character of the Braille text or to a part of said character. Each set will have four data bits (one data bit for each row N1...N4 of the electronic device 1 of Fig. 1). Next, i) the driver 15 uploads a first element of the succession of elements into the first column M1 of the device. This upload of the first element is preferably performed one bit at a time, i.e., in a sequential manner for each row N1...N4, based on the mentioned clock signal received by the driver 15, each bit corresponding to a specific Braille character, or to a part thereof, will be gradually uploaded into each row N1...N4 of the first column M1. Then, ii) the driver 15, upon receiving the mentioned activation signal /LE, moves the first element uploaded into the first column M1 to the second column M2, an electric pulse mimicking the Braille reading dot being generated in the activable areas 11 of said first and second columns M1, M2 (or even only of the first column M1, depending on the Braille character that is to be represented). Once the different activable areas 11 are activated, iii) the preceding steps i) and ii) are repeated for all the elements of the succession of elements, gradually replacing the elements that have previously entered the first and second columns M1, M2.

As indicated above, the speed controller 12 allows controlling the reading speed in the electronic device 1. This mechanical or voice-activated speed controller 12 will change a value saved beforehand in a position of the memory of the electronic device 1. This value will act in the generation of the clock signal and activation signal /LE by the processing unit. The activation times of said two signals are preferably based on the following equations: Clock = speed value marked by the speed controller 12 and Activation = speed value x 4. Therefore, the activation signal /LE is activated once for every four times the clock signal is activated.

The single character mode works in a manner similar to the movement mode for the mentioned steps i), ii), and iii). In other words, i) the driver 15, based on the information in its log, uploads a first element of the succession of elements into the first column M1 of the device. Then, ii) the driver 15, upon receiving the mentioned activation signal /LE, moves the first element uploaded into the first column M1 to the second column M2, an electric pulse mimicking the Braille reading dot being generated in the activable areas 11 of said first and second columns M1, M2 (or even only of the first column M1, depending on the Braille character that is to be represented). Once the different activable areas 11 are activated, iii) the preceding steps i) and ii) are repeated for all the elements of the succession of elements, gradually replacing the elements that have previously entered the first and second columns M1, M2.

Unlike the movement mode, in the single character mode, the speed controller 12 gives the value for the generation of the activation signal /LE upon having activated the clock signal twelve times. In this manner, the driver 15 assures that at least the first two columns M1, M2 of the electronic device 1 have the Braille character to be represented.

Although the activation signal /LE is preferably generated/implemented by the processing unit, in other non-illustrated embodiments, this activation signal /LE can be directly generated by the speed controller 12. In this case, the speed controller 12 can be operatively connected with the driver 15 so that this latter unit receives the activation signal /LE directly from the speed controller 12 or the speed controller 12 can be operatively connected with the activable areas 11, for example by means of connections using logic gates, so that the activable areas 11 receive the activation signal /LE directly from the speed controller 12.

The scope of the present invention is defined in the attached claims.

## Claims

1. A reading method for blind people via an electronic device, comprising using an electronic device (1) which integrates:
- a surface (10) with a plurality of activable areas (11) distributed on said surface (10) in a configuration of at least three rows (N) and at least two columns (M);
- a processing unit including one or more processors and at least one memory, said processing unit being adapted and configured for processing at least one text file and converting it into Braille text;
- said plurality of activable areas (11) being adapted and configured for implementing an electric pulse technology by means of the generation of an electric potential to mimic a Braille reading dot according to said previously converted Braille text; and
- a speed controller (12) for controlling an activation speed of said plurality of activable areas (11),
the method being **characterized in that** it comprises the following steps:
a) feeding, by means of the processing unit into a log of a driver (15), characters of the Braille text in the form of a succession of elements, wherein each element corresponds to an X-bit data set, and wherein each X-bit data set corresponds to a specific representative character of the Braille text or to a part of said character;
b) uploading, by means of said driver (15), a first element of said succession of elements into a first column (M1) of said at least two columns (M);
c) moving, by means of said driver (15), said first element to a second column (M2) of said at least two columns (M); and
d) generating, in said step b) or in said step c), said electric pulse in the first column (M1), or in the first and in the second column (M2), when the driver (15) receives an activation signal (/LE),
such that at least one finger placed on the surface (10) and affecting the two columns (M1, M2), or one of them, will perceive as a result of the electric pulse of step d) a Braille character, or a part thereof, generated by said activable areas; and
wherein the method repeats said steps b) to d) for all the elements of the succession of elements, gradually replacing the elements that have previously entered at least the first and second columns (M1, M2).

2. The method according to claim 1, wherein said first element comprises at least three data bits, and the method in said step b) uploads each of said three data bits, which are at least three in number, corresponding to a specific representative character of the Braille text or to a part thereof, sequentially into each of the rows (N) present in the first column (M1) based on a clock signal received by said driver (15).

3. The method according to claim 1 or 2, wherein said step d) is performed when said at least two columns (M1, M2) have received two consecutive elements, such that each of the characters of the Braille text is individually perceived.

4. The method according to claim 1 or 2, wherein said step d) is performed when each column (M1, M2) receives an element of said series of elements such that the characters of the Braille text are being progressively configured along said at least two columns (M1, M2).

5. The method according to claim 1, wherein said plurality of activable areas (11) is distributed on said surface (10) in a configuration of at least three rows (N) and a number of columns (M) higher than two such that the elements of said succession of elements gradually move from column to column from one end of the surface (10) to the other.

6. The method according to claim 5, comprising detecting, by means of a position sensor of the electronic device (1), the position of at least said finger on the surface (10).

7. The method according to claim 1, further comprising generating a sound signal for indicating the Braille character generated by the activable areas (11).

8. The method according to claim 1, wherein said speed controller (12) is adjustable, mechanically or by means of a voice interface.

9. An electronic reading device for blind people, comprising:
- a surface (10) with a plurality of activable areas (11) distributed on said surface (10) in a configuration of at least three rows (N) and at least two columns (M);
- a processing unit including one or more processors and at least one memory, the processing unit being adapted and configured for processing at least one text file and converting it into Braille text;
- said plurality of activable areas (11) adapted and configured for implementing an electric pulse technology by means of the generation of an electric potential to mimic a Braille reading dot according to said previously converted Braille text; and
- a speed controller (12) for controlling an activation speed of said plurality of activable areas (11),
the electronic device (1) being **characterized in that** it further comprises a driver (15) in connection with the processing unit, said driver (15) and said processing unit being adapted and configured for implementing the steps of the method of claim 1.

10. The device according to claim 9, wherein the electronic device (1) is a portable and autonomous device including a supply battery.

11. The device according to claim 9, wherein said activable areas (11) are made by means of actuators projecting from the surface (10).

12. The device according to claim 9 or 11, wherein said plurality of activable areas (11) is distributed on said surface (10) in a configuration of at least three rows (N) and a number of columns (M) higher than two.

13. The device according to claim 12, further comprising a position sensor adapted and configured for detecting the position of at least one finger on the surface (10).

14. The device according to any one of claims 9 to 13, further comprising electroacoustic means generating a sound signal for indicating the Braille character generated by the activable areas (11).

15. Device according to any one of claims 9 to 14, further comprising a mechanical or a voice interface for adjusting the speed controller (12).
